# FASCICULE DE BREVET EUROPEEN

(11) **EP 3 768 598 B1**
(45) Date de publication et mention de la délivrance du brevet: **16.03.2022**
(21) Numéro de dépôt: 19718426.0
(22) Date de dépôt: 18.03.2019
(51) Int. Cl.: B64D 15/16, B64D 15/20

(54) **PROCÉDÉ D'ALIMENTATION ÉLECTRIQUE D'UN DÉGIVRAGE ET D'UN ANTIGIVRAGE DE NACELLE PAR ULTRASONS**
VERFAHREN ZUR STROMVERSORGUNG EINES ULTRASCHALL-ENTEISUNGS- UND EISSCHUTZSYSTEMS EINER GONDEL
METHOD FOR SUPPLYING POWER TO AN ULTRASONIC DEICING AND ANTI-ICING SYSTEM OF A NACELLE

(30) Priorité: 19.03.2018 FR 1852325
(43) Date de publication de la demande: 27.01.2021
(73) Titulaire: Safran Nacelles, 76700 Gonfreville-l'Orcher (FR)
(72) Inventeur: GONIDEC, Patrick, 76700 Gonfreville L'Orcher (FR); RAMI, Jean-Paul, 76700 Gonfreville L'Orcher (FR); MAALIOUNE, Hakim, 76700 Gonfreville L'Orcher (FR); BILLARD, Rémi, 06560 Valbonne (FR); RIGOLET, Vincent, 06560 Valbonne (FR); SAUZADE, Jean-Denis, 06560 Valbonne (FR)
(74) Mandataire: Germain Maureau
(86) Numéro de dépôt international: PCT/FR2019/050607
(87) Numéro de publication internationale: WO 2019/180361

(56) Documents cités:
- WO-A1-2014/040819
- US-A1- 2008 054 762
- US-A1- 2010 031 972
- US-A1- 2013 032 671
- US-A1- 2016 023 772

## Description

La présente demande de brevet se rapporte à un procédé et à un système de dégivrage ou d'anti-givrage de partie d'aéronef.

La formation de givre sur des parties d'aéronef, telles que les bords d'attaque des ailes ou les lèvres d'entrée d'air de nacelles de turboréacteurs, est un problème récurrent dans le domaine de l'aéronautique.

En effet, l'apparition de givre sur ces parties d'aéronef non seulement augmente le poids de ce dernier, mais encore est susceptible de conduire à la formation de blocs de glace pouvant se détacher et venir impacter des parties sensibles de l'aéronef, telles que les aubes d'une soufflante de turboréacteur.

Pour cette raison, de nombreux travaux ont été effectués dans l'art antérieur, afin de mettre en place des systèmes permettant de lutter efficacement contre la formation de givre (anti-givrage), et de faire disparaître la couche de givre une fois que celle-ci est apparue (dégivrage).

Certains systèmes de la technique antérieure sont pneumatiques : de l'air chaud est prélevé sur le moteur de l'aéronef, et cet air chaud vient lécherfaces internes des parois à dégivrer, de manière à faire fondre le givre qui se forme sur les faces externes de ses parois.

Ce système pneumatique, bien qu'assez efficace, présente l'inconvénient de nécessiter un circuit de tuyauterie spécifique, et de prélever une partie significative d'énergie sur les moteurs, venant ainsi pénaliser le rendement de ceux-ci.

On trouve par ailleurs dans la technique antérieure des systèmes permettant de faire vibrer les parois sur lesquelles se forme le givre : cette vibration est obtenue au moyen d'éléments piézoélectriques fixés sur les faces internes de ces parois ; l'envoi de courants électriques d'excitation dans ces éléments permet de les faire vibrer, et de provoquer ainsi un décollement mécanique de la couche de givre se formant sur la face externe de la paroi.

Un exemple de cette technologie est proposé par le document antérieur US20100031972, qui décrit un procédé de commande d'éléments piézoélectriques permettant d'additionner les amplitudes des vibrations produites par ces éléments en chaque point de la paroi à dégivrer, et ainsi d'optimiser la consommation électrique de ces éléments. Le document US2013032671 divulgue une méthode et un appareil pour inhiber la formation de et/ou enlever la glace des composants d'un avion.

La présente invention vise à améliorer cette dernière technologie.

A cet effet, la présente invention fournit un procédé de dégivrage ou d'anti-givrage de partie d'aéronef au moyen d'au moins un élément piézoélectrique fixé sur la face interne de cette partie, ce procédé étant caractérisé en ce qu'il comprend les étapes suivantes :
- pendant la conception de ladite partie, on place ledit élément piézoélectrique sur une zone de ladite partie afin de rechercher les fréquences de résonance et de couplage dynamique optimal, et
- lors du dégivrage ou de l'anti-givrage de ladite partie, on excite le même élément piézoélectrique selon des fréquences propres de ladite zone.

Grâce au procédé selon l'invention, qui comprend une étape préalable de placement de chaque élément piézoélectrique sur une zone de la partie d'aéronef à dégivrer qui permet un couplage électrotechnique optimal, puis une étape d'excitation de cet élément piézoélectrique à des fréquences permettant de faire résonner cette zone, on obtient une amplitude de vibration de cette zone qui est maximale, permettant ainsi de rompre puis de décoller la couche de givre.

Suivant d'autres caractéristiques optionnelles du procédé selon l'invention :
- on adapte l'impédance du circuit d'excitation dudit élément piézoélectrique à celle de cet élément,
- on vérifie au préalable le bon fonctionnement dudit élément piézoélectrique en mesurant son impédance et en la comparant avec son impédance nominale, ou bien en analysant la dérive de cette impédance,
- on identifie la présence de givre par mesures successives de l'amortissement dynamique dudit élément piézoélectrique au moyen d'un analyseur de spectre qui permet de caractériser par balayage fréquentiel la qualité du couplage électro-mécanique dudit élément piézo-électrique avec ladite partie,
- on excite ledit élément piézoélectrique dans plusieurs plages de fréquences, dont au moins une plage de fréquences situées entre 10kHz et 200 kHz, de manière simultanée ou successive, en fonction du résultat de l'étape de recherche des fréquences de résonance et de couplage dynamique optimal pendant ladite phase de conception,
- on excite ledit élément piézoélectrique par intermittence, soit avec une temporisation soit à partir d'une mesure de la variation d'impédance de cet élément,
- on prévoit un deuxième élément piézoélectrique situé à proximité dudit premier élément piézoélectrique, et si le niveau électrique détecté par ledit deuxième élément est proche du niveau d'excitation dudit premier élément, on en déduit que le dégivrage est opérationnel ; sinon, on excite également ledit deuxième élément, pour ajouter son action à celle dudit premier élément,
- on commute l'excitation d'un ensemble d'éléments piézoélectriques vers un autre ensemble, en fonction de l'épaisseur de givre, de manière à éviter de dégivrer des zones où cette épaisseur est faible, et à réduire ainsi la consommation d'énergie.

La présente invention se rapporte également à un système de dégivrage ou d'anti-givrage d'une partie d'aéronef, comprenant au moins deux éléments piézoélectriques fixés à l'intérieur de cette partie, et un circuit d'excitation comprenant un générateur de signaux, un amplificateur, un analyseur du spectre électrique produit par ledit élément piézoélectrique, un détecteur de fréquences propres, un comparateur à mémoire et un générateur de consignes de fréquences.

Suivant d'autres caractéristiques optionnelles de ce système :
- ledit circuit d'excitation comprend des moyens de stockage électrique tels qu'une batterie ou un super condensateur,
- ledit circuit d'excitation comprend des moyens d'adaptation d'impédance à l'impédance d'un desdits éléments piézoélectriques,
- ce système comprend une pluralité d'éléments piézoélectriques, et des moyens de multiplexage entre les systèmes d'alimentation et de contrôle de ces éléments piézoélectriques.

D'autres caractéristiques et avantages de la présente invention apparaîtront à la lecture de la description qui va suivre, et à l'examen des figures ciannexées, dans lesquelles :
- la figure 1 est une vue schématique d'une portion de lèvre d'entrée d'air d'une nacelle de turboréacteur d'aéronef, équipée d'un élément piézoélectrique relié à un boîtier de commande,
- la figure 2 est un schéma de l'architecture de commande de l'élément piézoélectrique de la figure 1, et
- la figure 3 est une vue analogue à celle de la figure 1, d'une variante comprenant un élément piézoélectrique passif disposé à côté d'un élément piézoélectrique actif.

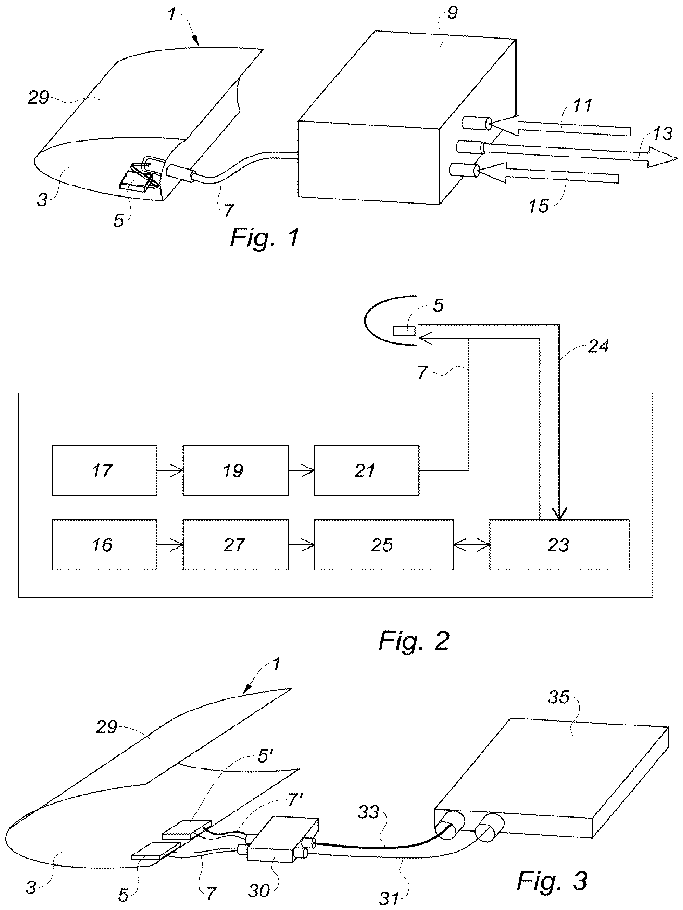

En se reportant à la figure 1, on a représenté de manière schématique une lèvre d'entrée d'air 1 d'une nacelle de turboréacteur d'aéronef, sur la face interne 3 de laquelle est collé un élément piézoélectrique 5, relié par un câblage électrique 7 à un boîtier de commande 9.

Ce boîtier de commande peut recevoir des ordres 11 provenant du pilote de l'aéronef, envoyer 13 des informations vers ce pilote, et être alimenté électriquement 15 par un circuit installé à bord de l'avion.

Plus précisément, l'architecture de commande de l'élément piézoélectrique 5 peut être visualisée sur la figure 2.

Cette architecture comprend un générateur 16 de consignes de fréquences, un générateur 17 de fréquences électriques, un amplificateur 19 de ces signaux, une inductance variable 21 permettant d'adapter l'impédance de l'excitation électrique à celle de l'élément piézoélectrique 5.

Les organes 16, 17, 19, 21 permettent d'engendrer une excitation électrique sinusoïdale de l'élément piézoélectrique 5 à travers le circuit d'excitation 7.

Un analyseur de spectre de fréquences 23 permet de mesurer à travers un circuit de retour 24 les fréquences de vibration effective de l'élément piézoélectrique 5.

Une électronique 25 permet de détecter les pics d'amplitude de vibration de l'élément piézoélectrique 5, indiquant ainsi que la paroi de l'entrée d'air 1 vibrent selon l'une de ces fréquences propres.

Un comparateur à mémoire 27 est interposé entre le détecteur de fréquences propres 25 et de générateur de consignes 16.

Le principe de fonctionnement de l'invention est le suivant.

Lors de la conception de l'entrée d'air 1, on place une pluralité d'éléments piézoélectriques tels que l'élément piézoélectrique 5 sur la face interne 3 de cette entrée d'air 1, à des endroits permettant de réaliser un couplage électrotechnique optimal, c'est-à-dire à des endroits permettant de maximiser l'amplitude de vibration de la paroi 3 sous l'effet de la vibration des éléments piézoélectriques 5 pour un courant d'excitation donnée.

Par la suite, en fonctionnement, au début d'une séquence de dégivrage ou d'anti-givrage, on commence par vérifier l'intégrité des éléments piézoélectriques en mesurant leur impédance, et en la comparant à une valeur nominale ou à une valeur précédemment enregistrée : tout écart important par rapport à cette valeur peut révéler un problème de collage ou d'intégrité de l'élément piézoélectrique concerné.

On envoie à chaque élément piézoélectrique 5 des impulsions électriques au moyen du générateur de signaux 17, et on examine l'amortissement de ces signaux au moyen de l'analyseur de spectre 23.

On peut avantageusement utiliser un bruit gris ou polyfréquentiel pour couvrir une bande de fréquences contenant des fréquences propres de la structure porteuse 1.

Lorsqu'un amortissement significatif est détecté, cela signifie que du givre est en cours de formation sur la paroi extérieure 29 de l'entrée d'air 1.

On envoie alors, au moyen du générateur de signaux 17 et de son amplificateur associé 19, un courant d'excitation de chaque élément piézoélectrique 5 selon des fréquences fixées par le générateur de consignes 16.

De préférence, ces fréquences d'excitation comprennent d'une part une plage de basses fréquences, typiquement situées aux alentours de 40 kHz, et d'autre part une plage de hautes fréquences, typiquement situées aux alentours de 200 Hz.

En fonction des signaux recueillis par l'analyseur de spectre 23, on fait varier ces fréquences d'excitation jusqu'à obtention d'un phénomène de résonnance de l'élément piézoélectrique 5, détecté par l'organe de détection de fréquences propres 25.

Cette mise en résonance de chaque élément piézoélectrique 5 permet d'obtenir une amplitude de vibration maximale de la zone concernée de la lèvre d'entrée d'air 1, et ainsi un fractionnement, puis un décollement de la couche de givre formé sur la face externe 29 de cette lèvre d'entrée d'air.

On notera que la plage de basses fréquences permet plus particulièrement de réaliser l'opération de fractionnement de la glace, et que la plage de hautes fréquences permet plus particulièrement de réaliser l'opération de décollement de cette couche de glace.

On notera que les courants d'excitation dans les deux plages de fréquences susmentionnées peuvent être envoyés de manière simultanée ou alternative vers les éléments piézoélectriques.

De manière avantageuse, on peut prévoir une temporisation fixe ou fonction de la mesure de la variation d'impédance des éléments piézoélectriques, permettant de n'exciter ceux-ci que lorsque la couche de givre atteint une épaisseur suffisante, typiquement située entre 0,5 et 0,6 mm : on a en effet pu constater de manière empirique que le dégivrage n'atteignait sa pleine efficacité que lorsqu'une telle épaisseur était atteinte.

Une amélioration importante peut être apportée en prévoyant que le circuit électronique d'excitation des éléments piézoélectriques 5 comprenne des moyens d'adaptation de l'impédance à celle de ses éléments piézoélectriques.

En effet, ces éléments piézoélectriques ont un comportement analogue à celui de condensateurs dans le circuit d'excitation électrique : ceci induit une puissance réactive importante et un mauvais cosφ, entraînant une perte d'énergie.

Les moyens d'adaptation d'impédance peuvent comprendre une inductance fixe (bobine) ou bien, de manière plus perfectionnée, une inductance variable en fonction de la fréquence d'excitation : cette dernière solution pourrait convenir notamment pour résorber les couches de givre très épaisses perturbant fortement les fréquences de résonance de la paroi à dégivrer.

Comme on peut le comprendre à la lumière de ce qui précède, l'invention permet d'optimiser l'amplitude des vibrations de la zone à dégivrer, pour une excitation électrique donnée : ceci permet d'expulser le givre avec une moindre consommation d'énergie électrique, par un procédé purement dynamique.

En pratique, on constate qu'il n'y a pratiquement pas de passage du givre à l'état liquide, de sorte qu'il n'y a pratiquement pas d'énergie électrique dissipée en chaleur : la disparition du givre est provoquée de manière quasi-exclusive par la mise en mouvement vibratoire de la paroi sur laquelle il s'est formé.

Selon la figure 3, à côté de
chaque élément piézoélectrique actif 5, c'est-à-dire sollicité par des excitations électriques conformément à ce qui précède, se trouve un élément piézoélectrique passif 5', ces deux éléments piézoélectriques étant reliés respectivement par des câbles électriques 7 et 7' à un comparateur 30, lui-même relié respectivement par des câbles d'excitation électrique 31 et de retour 33 à un bloc de contrôle 35.

L'élément piézoélectrique passif 5'
permet de mesurer les vibrations effectives provoquées par l'élément piézoélectrique actif 5, et de détecter un éventuel dysfonctionnement.

Dans l'éventualité d'un tel dysfonctionnement, on peut alors envoyer un courant d'excitation électrique dans l'élément piézoélectrique 5', de manière à le transformer en élément actif, et à ajouter sa contribution vibratoire à celle de l'élément piézoélectrique 5.

Dans une configuration plus économique, on peut envisager qu'il n'y ait pas d'une part des éléments piézoélectriques actifs et d'autre part des éléments piézoélectriques passifs, mais que tous les éléments piézoélectriques soient appariés (c'est-à-dire fonctionnent par paires) chaque élément piézoélectrique d'une paire pouvant fonctionner alternativement en élément actif ou en élément passif.

Dans une logique d'économie d'énergie, on notera que l'on peut envisager un multiplexage par zones des éléments piézoélectriques, permettant de n'exciter que les éléments piézoélectriques se trouvant dans une zone où la couche de givre a atteint une épaisseur suffisante (voir supra : typiquement entre 0,5 et 0,6 mm) afin d'optimiser la consommation d'énergie électrique.

Cette stratégie permet de réaliser une réelle économie de puissance en augmentant le ratio temps de reformation du givre/temps de dégivrage.

Toujours dans une logique d'économie d'énergie électrique, on peut également envisager un circuit électrique comprenant une batterie ou un super-condensateur, rechargé pendant le temps de reconstitution de la couche de givre, et déchargé lors de la mise en œuvre de l'excitation électrique de dégivrage, permettant ainsi d'augmenter le voltage de pic et donc les déflexions maximales des éléments piézoélectriques.

Bien entendu, la présente invention n'est nullement limitée aux modes de réalisation décrits est représentés.

## Revendications

1. Procédé de dégivrage ou d'anti-givrage de partie d'aéronef (1) au moyen d'au moins un élément piézoélectrique (5) fixé sur la face interne (3) de cette partie, ce procédé comprenant les étapes suivantes :
- pendant la conception de ladite partie (1), on place ledit élément piézoélectrique (5) sur une zone de ladite partie afin de rechercher les fréquences de résonance et de couplage dynamique optimal, et
- lors du dégivrage ou de l'anti-givrage de ladite partie (1), on excite le même élément piézoélectrique (5) selon des fréquences propres de ladite zone,
- le procédé est **caractérisé en ce qu'**on prévoit un deuxième élément piézoélectrique (5') situé à proximité dudit premier élément piézoélectrique (5), et si le niveau électrique détecté par ledit deuxième élément (5') est proche du niveau d'excitation dudit premier élément (5), on en déduit que le dégivrage est opérationnel ; sinon, on excite également ledit deuxième élément (5'), pour ajouter son action à celle dudit premier élément (5).

2. Procédé selon la revendication 1, dans lequel on vérifie au préalable le bon fonctionnement dudit élément piézoélectrique (5) en mesurant son impédance et en la comparant avec son impédance nominale, ou bien en analysant la dérive de cette impédance.

3. Procédé selon l'une quelconque des revendications précédentes, dans lequel on identifie la présence de givre par mesures successives de l'amortissement dynamique dudit élément piézoélectrique (5) au moyen d'un analyseur de spectre qui permet de caractériser par balayage fréquentiel la qualité du couplage électro-mécanique dudit élément piézo-électrique avec ladite partie.

4. Procédé selon l'une quelconque des revendications précédentes, dans lequel on excite ledit élément piézoélectrique (5) dans plusieurs plages de fréquences, dont au moins une plage de fréquences situées entre 10kHz et 200 kHz, de manière simultanée ou successive, en fonction du résultat de l'étape de recherche des fréquences de résonance et de couplage dynamique optimal pendant ladite phase de conception.

5. Procédé selon l'une quelconque des revendications précédentes, dans lequel on excite ledit élément piézoélectrique (5) par intermittence, soit avec une temporisation soit à partir d'une mesure de la variation d'impédance de cet élément.

6. Procédé selon l'une quelconque des revendications précédentes, dans lequel on commute l'excitation d'un ensemble d'éléments piézoélectriques vers un autre ensemble, en fonction de l'épaisseur de givre, de manière à éviter de dégivrer des zones où cette épaisseur est faible, et à réduire ainsi la consommation d'énergie.

7. Système de dégivrage ou d'anti-givrage pour une partie (1) d'aéronef, mettant en œuvre le procédé de dégivrage selon l'une quelconque des revendications précédentes, le système comprenant au moins deux éléments piézoélectriques (5, 5') configurés pour être fixés à l'intérieur de cette partie, et un circuit d'excitation comprenant un générateur de signaux (17), un amplificateur (19), un analyseur du spectre électrique (23) produit par l'un des deux éléments piézoélectriques (5), un détecteur de fréquences propres (25), un comparateur à mémoire (27) et un générateur de consignes de fréquences (16).

8. Système selon la revendication 7, dans lequel ledit circuit d'excitation comprend des moyens de stockage électrique tels qu'une batterie ou un super condensateur.

9. Système selon l'une des revendications 7 ou 8, dans lequel ledit circuit d'excitation comprend des moyens d'adaptation d'impédance (21) à l'impédance d'un desdits éléments piézoélectriques (5).

10. Système selon l'une quelconque des revendications 7 à 9, comprenant aux moins trois éléments piézoélectriques (5), et des moyens de multiplexage entre les systèmes d'alimentation et de contrôle de ces éléments piézoélectriques.

## Patentansprüche

1. Verfahren zum Enteisen oder Eisschutz eines Flugzeugteils (1) mittels mindestens eines piezoelektrischen Elements (5), das auf der inneren Fläche (3) dieses Teils befestigt ist, wobei dieses Verfahren die folgenden Schritte umfasst:
- Platzieren, während der Konzipierung des Teils (1), des piezoelektrischen Elements (5) auf einer Zone des Teils, um die Resonanz- und optimalen dynamischen Kopplungsfrequenzen zu ermitteln, und
- Erregen, beim Enteisen oder Eisschutz des Teils (1), eben dieses piezoelektrischen Elements (5) gemäß Frequenzen, die der Zone zu eigen sind,
- wobei das Verfahren **dadurch gekennzeichnet ist, dass** ein zweites piezoelektrisches Element (5') vorgesehen ist, das sich in der Nähe des ersten piezoelektrischen Elements (5) befindet, und wenn das von dem zweiten Element (5') ermittelte elektrische Niveau nahe dem Erregungsniveau des ersten Elements (5) ist, daraus abgeleitet wird, dass das Enteisen operativ ist; anderenfalls ebenfalls das zweite Element (5') erregt wird, um dessen Wirkung der des ersten Elements (5) hinzuzufügen.

2. Verfahren nach Anspruch 1, wobei zuvor die ordentliche Funktionsweise des piezoelektrischen Elements (5) durch Messen seiner Impedanz und durch Vergleichen derselben mit dessen nominaler Impedanz oder auch durch Analyse der Abweichung von dieser Impedanz überprüft wird.

3. Verfahren nach einem der vorangehenden Ansprüche, wobei das Vorhandensein von Eis durch aufeinanderfolgende Messungen der dynamischen Dämpfung des piezoelektrischen Elements (5) mittels eines Spektralanalysators identifiziert wird, der erlaubt, durch Frequenzgang die Qualität der elektromechanischen Kopplung des piezoelektrischen Elements mit dem Teil zu charakterisieren.

4. Verfahren nach einem der vorangehenden Ansprüche, wobei das piezoelektrische Element (5) in mehreren Frequenzbereichen, darunter mindestens in einem Frequenzbereich, der zwischen 10 kHz und 200 kHz liegt, gleichzeitig oder aufeinanderfolgend in Abhängigkeit vom Ergebnis des Schritts der Ermittlung der Resonanz- und optimalen dynamischen Kopplungsfrequenzen während der Konzipierungsphase erregt wird.

5. Verfahren nach einem der vorangehenden Ansprüche, wobei das piezoelektrische Element (5) durch Intermittenz entweder mit einer Zeitverzögerung oder ausgehend von einer Messung der Impedanzschwankung dieses Elements erregt wird.

6. Verfahren nach einem der vorangehenden Ansprüche, wobei die Erregung einer Anordnung piezoelektrischer Elemente zu einer anderen Anordnung in Abhängigkeit von der Dicke des Eises geschaltet wird, so das vermieden wird, Zonen zu enteisen, wo diese Dicke gering ist, und somit der Energieverbrauch reduziert wird.

7. System zum Enteisen oder Eisschutz für ein Flugzeugteil (1), das das Enteisungsverfahren nach einem der vorangehenden Ansprüche durchführt, wobei das System mindestens zwei piezoelektrische Elemente (5, 5'), die ausgelegt sind, um im Inneren dieses Teils befestigt zu sein, und einen Erregungskreis, der einen Signalerzeuger (17), einen Verstärker (19), einen Analysator des von einem der beiden piezoelektrischen Elemente (5) erzeugten elektrischen Spektrums (23), einen Eigenfrequenzdetektor (25), einen Komparator mit Speicher (27) und einen Referenzfrequenzerzeuger (16) umfasst.

8. System nach Anspruch 7, wobei der Erregungskreis elektrische Speichermittel wie eine Batterie oder einen Superkondensator umfasst.

9. System nach einem der Ansprüche 7 oder 8, wobei der Erregungskreis Mittel zur Anpassung der Impedanz (21) an die Impedanz von einem der piezoelektrischen Elemente (5) umfasst.

10. System nach einem der Ansprüche 7 bis 9, das mindestens drei piezoelektrische Element (5) und Multiplexmittel zwischen den Versorgungs- und Kontrollsystemen dieser piezoelektrischen Elemente umfasst.

## Claims

1. A method for de-icing or anti-icing an aircraft portion (1) by means of at least one piezoelectric element (5), fastened on the inner face (3) of this portion, this method comprising the following steps:
- during the design of said portion (1), said first piezoelectric element (5) is placed on an area of said portion in order to search for the frequencies of resonance and optimal dynamic coupling, and
- during the de-icing or anti-icing of said portion (1), the same first piezoelectric element (5) is excited according to the natural frequencies of said area,
- the method is **characterized in that** it is provided a second piezoelectric element (5') located near said first piezoelectric element (5), and if the electrical level detected by said second piezoelectric element (5') is close to the excitation level of said first element (5), it is deduced that the de-icing is operational; otherwise, said second piezoelectric element (5') is also excited, to add its action to that of said first piezoelectric element (5).

2. The method according to claim 1, wherein the proper operation of said first piezoelectric element (5) is previously checked by measuring its impedance and comparing it with its nominal impedance, or else by analyzing the drift of this impedance.

3. The method according to any one of the preceding claims, wherein the presence of frost is identified by successive measurements of the dynamic damping of said first piezoelectric element (5) by means of a spectrum analyzer which allows **characterizing, by** frequency scanning, the quality of the electro-mechanical coupling of said first piezoelectric element with said portion.

4. The method according to any one of the preceding claims, wherein said first piezoelectric element (5) is excited in several frequency ranges, including at least one frequency range between 10 kHz and 200 kHz, simultaneously or successively, depending on the result of the step of searching for frequencies of resonance and optimal dynamic coupling during said design phase.

5. The method according to any one of the preceding claims, wherein said first piezoelectric element (5) is excited intermittently, either with a timing or from a measurement of the variation in impedance of this element.

6. The method according to any one of the preceding claims, wherein the excitation of a set of piezoelectric elements is switched to another set, depending on the frost thickness, so as to avoid de-icing areas where this thickness is small, and thus reduce the energy consumption.

7. A system for de-icing or anti-icing an aircraft portion (1), implementing the de-icing method according to any one of the preceding claims, the system comprising at least two piezoelectric elements (5,5'), configured to be fastened inside this portion, and an excitation circuit comprising a signal generator (17), an amplifier (19), an analyzer of the electrical spectrum (23) produced by one of the two piezoelectric elements (5), a natural frequency detector (25), a memory comparator (27) and a frequency setpoint generator (16).

8. The system according to claim 7, wherein said excitation circuit comprises electrical storage means such as a battery or a super capacitor.

9. The system according to any of claims 7 or 8, wherein said excitation circuit comprises means (21) for matching impedance with the impedance of one of said piezoelectric elements (5).

10. The system according to any one of claims 7 to 9, comprising at least three piezoelectric elements (5), and multiplexing means between the systems for supplying power to and monitoring these piezoelectric elements.
